# EUROPÄISCHE PATENTSCHRIFT

(11) **EP 0 570 668 B1**
(45) Veröffentlichungstag und Bekanntmachung des Hinweises auf die Patenterteilung: **02.01.1997**
(21) Anmeldenummer: 93102616.5
(22) Anmeldetag: 19.02.1993
(51) Int. Cl.: F16B 7/04

(54) **Spannschloss**
Clamping mechanism
Mécanisme de serrage

(30) Priorität: 19.05.1992 DE 4216439
(43) Veröffentlichungstag der Anmeldung: 24.11.1993
(73) Patentinhaber: INTUR SYSTEM-PROFIL GmbH + CO., D-49744 Geeste (DE)
(72) Erfinder: Schomakers, Franz, W-4478 Geeste 1 (Dalum) (DE)
(74) Vertreter: Busse & Busse Patentanwälte

(56) Entgegenhaltungen:
- EP-A- 0 412 339
- DE-A- 3 129 597
- FR-A- 732 532
- FR-A- 2 152 941
- LU-A- 81 874

## Beschreibung

Die Erfindung bezieht sich auf ein Spannschloß zum Verbinden eines mit einer Rastausnehmung versehenen Hohlprofils mit einem einen Klemmrandansatz aufweisenden Trägerelement, insbesondere zum Verbinden von Hohlprofilstangen mit mit hinterschnittenen Nuten als Klemmrandansätze versehenen Vertikalstützen von auf- und abbaubaren Gestellen, mit einem in das Hohlprofil einführbaren und über einen Mitnehmer in der Rastausnehmung des Hohlprofil arretierbaren Gehäuse und mit einer durch eine Drehbewegung des Mitnehmers aus einer Spannausgangslage in eine Spannendstellung überführbaren Klemmfeder mit einem in der Spannendstellung den Klemmrandansatz hintergreifenden Klemmfingerteil, wobei die Klemmfeder und der Mitnehmer in dem Gehäuse beweglich angeordnet sind und das Klemmfingerteil im Verlaufe der Spannbewegung der Klemmfeder über ein im Gehäuse festlegbares Widerlager in eine quer zur Gehäuselängsachse gerichtete Spannspreizstellung bewegbar ist.

Ein Spannschloß der vorgenannten Art ist aus der EP-A-0 059 463 bekannt. Bei diesem Spannschloß ist der Mitnehmer als Exzenter ausgebildet, der eine lochförmige Ausnehmung des Gehäuses durchgreift. Über die Klemmfeder ist er eindrückbar in der Spannausgangsstellung ausgebildet, so daß er nach Eindrücken mitsamt dem Gehäuse in das Innere des Hohlprofil einzuführen ist. In dem Hohlprofil ist in der Montagestellung eine den Mitnehmer übergreifende Hohlprofilausnehmung vorgesehen, so daß er unter Einfluß der Federkraft der Klemmfeder in der Hohlprofilausnehmung verrastet und eine sichere Verbindung des Spannschlosses mit dem Hohlprofil sicherstellt. In der Spannendstellung der Klemmfeder, in der über den Exzenter des Mitnehmers das hakenförmige Ende des Klemmfingerteils und der Klemmfeder hinter dem Klemmrandansatz des Trägerelementes verrastet ist, ist der Mitnehmer über ein gehäuseseitiges Stützelement an einem Eindrücken gehindert. Das Klemmfingerteil bzw. die Klemmfeder hat mit gehäuseseitigen Einbuchtungen zusammenwirkende Schrägflächen, um im Verlaufe der Mitnehmerbewegung eine quer zur Gehäuselängsachse ausgerichtete Spannspreizbewegung ausführen zu können. Dies stellt an die Paßgenauigkeit der Teile erhöhte Anforderungen. Demzufolge ist der Exzenter des Mitnehmerelementes sehr genau zu fertigen, um mit einem beherrschbaren Kraftaufwand den nur einseitig gelagerten Exzenter sicher zur Festlegung des Spannschlosses und damit des Hohlprofils an dem Trägerelement benutzen zu können. Die aufzubringenden Kräfte für das manuelle Verspannen dieses Spannschlosses sind demnach erheblich.

Es ist Aufgabe der vorliegenden Erfindung, ein Spannschloß der eingangs genannten Art zur Verfügung zu stellen, mit dem sicher ein Hohlprofil an einem Trägerelement festlegbar ist, das jedoch in handhabungstechnisch einfacher Weise betätigbar ist.

Zur Lösung dieser Aufgabe zeichnet sich das Spannschloß der eingangs genannten Art dadurch aus, daß sowohl die Klemmfeder als auch der Mitnehmer eine kurvenbahnförmige Mitnehmerkulisse und einen in die betreffende Gegenkulisse eingreifenden, sowie die Klemmfeder und den Mitnehmer bewegungsfest verbindenden Mitnehmerbolzen haben.

Bei dem Spannschloß nach der Erfindung kann das Mitnehmerelement auf exzenterförmige Ansätze völlig verzichten. Die notwendigen Teile, insbesondere auch Mitnehmerbolzen, können mit entsprechenden Abmessungen handelsübliche Bolzenteile sein, die beispielsweise in mit geringem Fertigungsaufwand herzustellende Mitnehmerkulissen, z.B. Ausstanzungen oder auch Ausfräsungen, derart eingreifen können, daß die aufzubringenden Kräfte gegenüber bekannten Schlössern vermindert sind. Sowohl Klemmfeder als auch Mitnehmer haben jeweils eine Mitnehmerkulisse, in die jeweils ein separates Mitnehmerbolzenteil, sei es ein demontierbares oder ein angeformtes, eingreifen. Dadurch ist eine doppelte Lagerung und damit ein sicheres Zusammenwirken ohne die Gefahr von Verkantungen im Verlaufe der Spannbewegung zu gewährleisten. Kommt es zu einem etwaigen Bruch eines Kraftübertragungsteils, beispielsweise eines Mitnehmerbolzens, gewährleistet das andere Mitnehmerbolzenteil mit zugeordneter Mitnehmerkulisse die Funktionssicherheit des Spannschlosses.

Um das Spannschloß außerordentlich sicher an den Klemmrandansätzen von bevorzugtermaßen hinterschnittenen Nuten von Stützprofilen festlegen zu können, sieht eine Weiterbildung des Spannschlosses nach der Erfindung vor, daß das Klemmfingerteil der Klemmfeder zwei gegenläufig quer zur Gehäuselängsachse bewegbare Klemmfinger hat. Im gespannten und damit montierten Zustand eines Hohlprofils an dem Trägerelement verrasten dabei die beiden Klemmfinger an gegenüberliegenden Ansatzbereichen und bringen dabei auf das Stützprofil gegensinnig ausgerichtete Spannkräfte auf. Damit ist eine außerordentlich belastbare und sichere Befestigung des Hohlprofils gewährleistet. In einfacher Weise lassen sich diese beiden Klemmfinger auch durch die Mitnehmerbolzen und die Mitnehmerkulissen handhaben, da sowohl in dem Mitnehmerelement als auch der Klemmfeder die Mitnehmerkulissen bzw. die Mitnehmerbolzen vorgesehen sind. In baulich einfacher Weise ohne das Erfordernis von gehäuseseitigen Einbuchtungen, Schrägflächen und dergleichen ist für die Realisierung der quer zur Gehäuselängsrichtung ausgerichteten Spannspreizbewegung des Klemmfingerteils bzw. der beiden Klemmfinger ein zylinderstiftförmiges Widerlager, das in der Längsmittelebene des Gehäuses angeordnet ist, vorzusehen. Dabei umgreifen die beiden Klemmfinger diesen zentralen Zylinderstift scherenartig, so daß automatisch durch ein einfaches Drehen des Mitnehmers die beiden Klemmfinger der Klemmfeder auseinandergespreizt werden.

Wesentliche weitere Ausgestaltungen des Spannschlosses nach der Erfindung ergeben sich aus den Ansprüchen 2 bis 9. Zur weiteren Erläuterung der Erfindung wird auf die Zeichnung und die Zeichnungsbeschreibung verwiesen. In der Zeichnung zeigen:
- Fig. 1: eine Draufsicht auf das Unterteil eines Gehäuses eines Ausführungsbeispiels eines Spannschlosses nach der Erfindung;
- Fig. 2: eine geschnittene Seitenansicht des Ausführungsbeispiels nach Fig. 1;
- Fig. 3: eine Ansicht von hinten auf das Ausführungsbeispiel nach den Fig. 1 und 2;
- Fig. 4: eine Draufsicht auf eine Abdeckplatte des Gehäuses nach den Fig. 1 bis 3;
- Fig. 5: eine Seitenansicht der Abdeckplatte nach Fig. 4,
- Fig. 6: eine Seitenansicht einer Klemmfeder eines Ausführungsbeispiels eines Spannschlosses;
- Fig. 7: eine Draufsicht auf die Klemmfeder nach Fig. 6;
- Fig. 8: eine Seitenansicht eines Mitnehmers eines Ausführungsbeispieles eines Spannschlosses;
- Fig. 9: eine Draufsicht auf den Mitnehmer nach Fig. 8
- Fig. 10: in einer schematischen geschnittenen Darstellung des Ausführungsbeispiels des Spannschlosses nach der Erfindung in zusammengebautem Zustand der Teile nach den Fig. 1 bis 9 im montierten Zustand in einem Hohlprofil in Spannausgangsstellung;
- Fig. 11: eine zu Fig. 10 analoge Darstellung in der Spannendstellung der Teile;
- Fig. 12: eine Draufsicht auf das Ausführungsbeispiel gemäß Fig. 10;
- Fig. 13: eine Draufsicht auf das Ausführungsbeispiel gemäß Fig. 11;
- Fig. 14: eine Darstellung analog zu Fig. 12 mit abgenommener Abdeckplatte, und
- Fig. 15: vergrößert die Darstellung X gemäß Fig. 12.

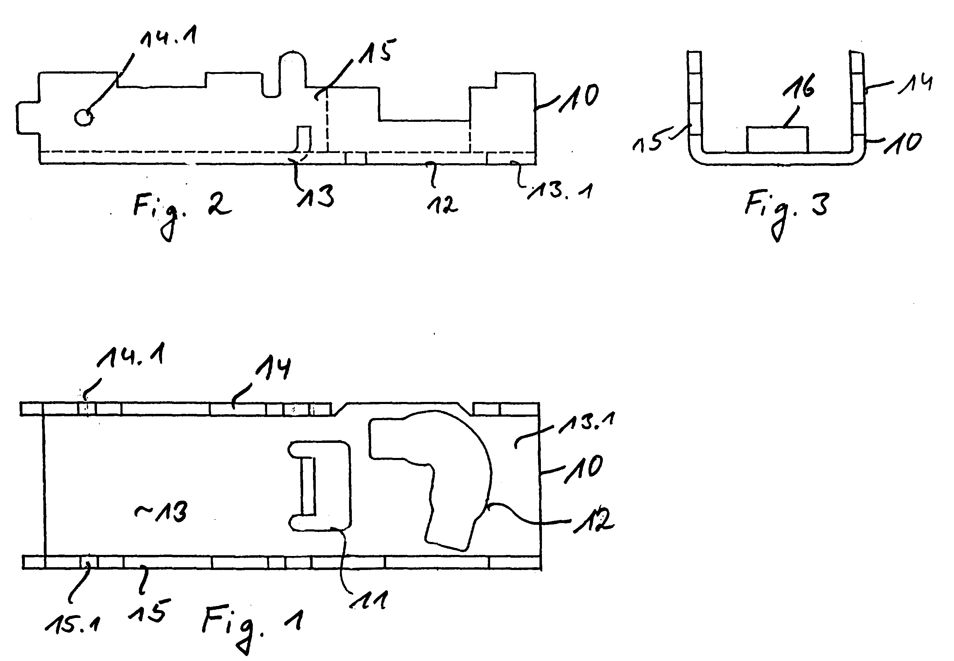

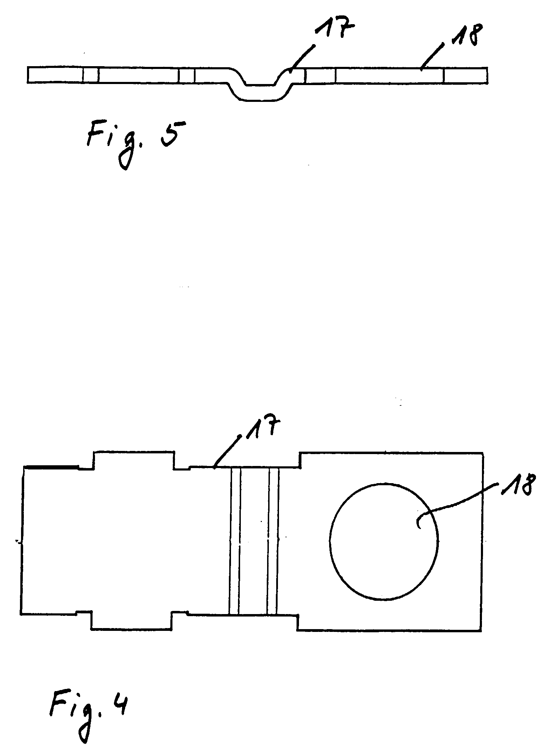

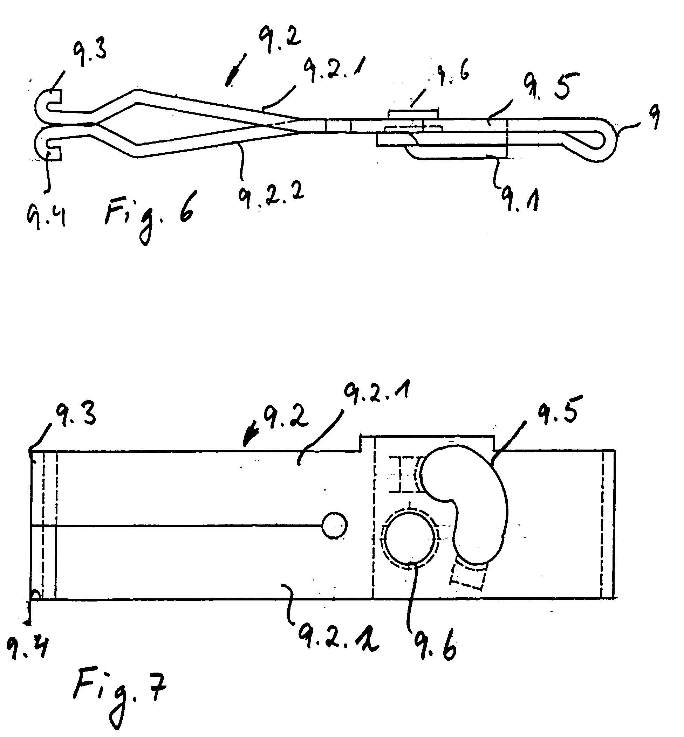

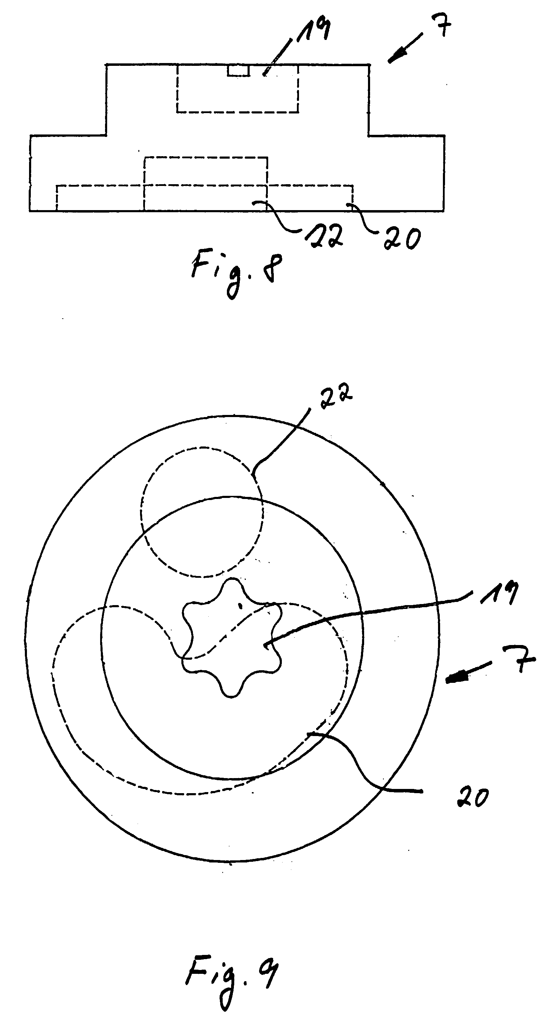

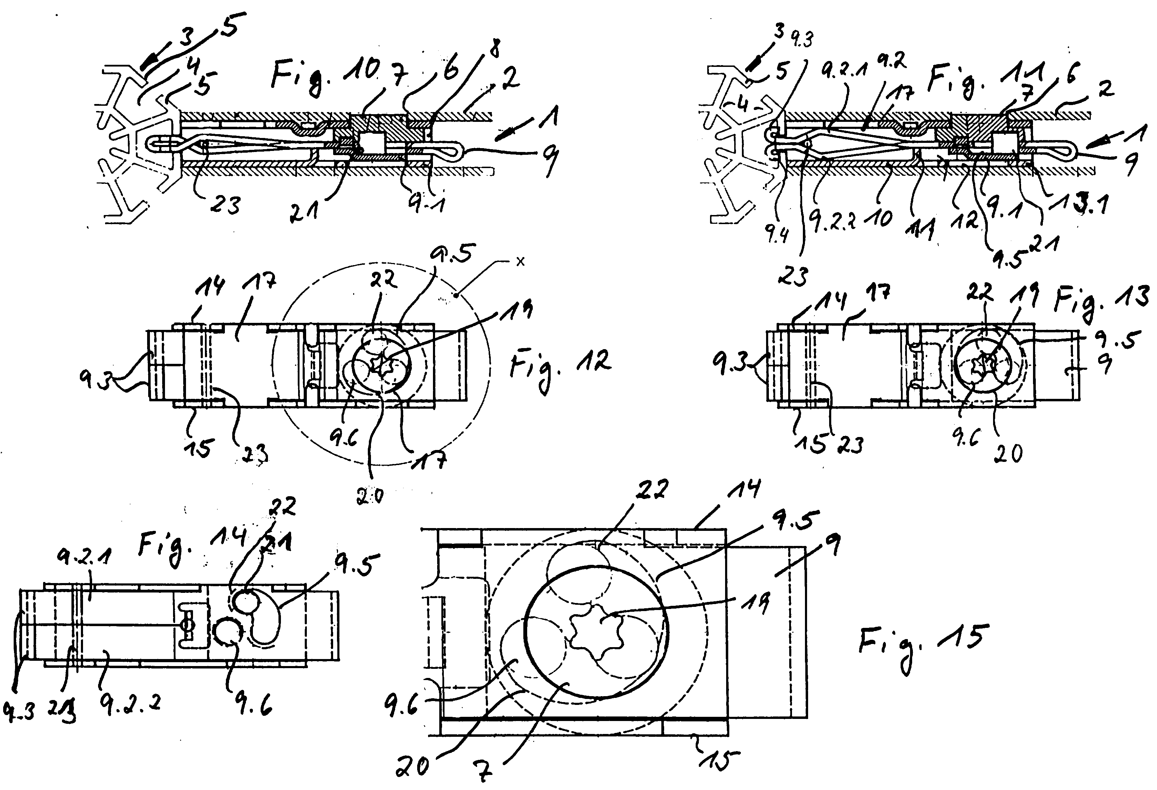

Das in der Zeichnung allgemein mit 1 bezifferte Spannschloß dient, wie im einzelnen näher aus den Fig. 10 und 11 ersichtlich ist, zum Verbinden eines Hohlprofils 2 mit einem Stützprofil 3, das nutenförmige Ausnehmungen 4 und mithin durch die hinterschnittenen Nutenausnehmungen 4 gebildete Klemmrandansätze 5 hat. Das Hohlprofil 2 hat eine Hohlprofilausnehmung 6, in die der Mitnehmer 7 des Spannschlosses 1 einrasten kann. Das Spannschloß 1 besteht insgesamt aus einem Gehäuseunterteil 10 (Fig. 1 bis 3), einer Gehäuseabdeckplatte 8 (Fig. 4 und 5), einer allgemein mit 9 bezifferten Klemmfeder (Fig. 6 und 7) sowie dem Mitnehmer 7 (Fig. 8 und 9).

Das Gehäuseunterteil 10 hat eine bahnförmige Ausnehmung 11 im Bodenbereich 13 sowie Seitenwände 14,15. Im Bodenbereich 13 hat es einen nach oben ragenden Vorsprung 16, auf dem im montierten Zustand der Teile die Feder 9 translatorisch bewegbar ist. Das Teil 9.1 der Feder (Fig. 6,10,11) ist in die Ausnehmung 12 in der Spannausgangsstellung der Klemmfeder 9 (Fig. 10) eindrückbar, so daß auch der Mitnehmer 7 aus der Ausnehmung 6 des Hohlprofils herausgedrückt werden kann. In der Spannendstellung der Klemmfeder 9 (Fig. 11) hingegen ist das Teil 9.1 der Klemmfeder über das rückwärtige Ende 13.1 des Bodens 13 zu bewegen, so daß sowohl die Klemmfeder 9 und über die Klemmfeder 9 der Mitnehmer 7 für eine sichere Verrastung der Teile arretiert und nicht mehr eindrückbar ist. Die Abdeckplatte 17 des Gehäuses hat eine Gehäuseausnehmung 18, in die das obere Ende des Mitnehmers 7 eindringen kann. Der Mitnehmer 7 (Fig. 8,9) ist mit stufenförmig kreisrundem Querschnitt zu seinen Vertikallängsmittelebenen symmetrisch aufgebaut und hat in dem veranschaulichten Ausführungsbeispiel eine zentrale, im montierten Zustand von außen her zugängliche Betätigungsöffnung 19. Darüber hinaus ist in den Mitnehmer 7 eine bahnförmige Mitnehmerkulisse 20 eingefräst. Zum Einführen eines Mitnehmerbolzens 21 (Fig. 10,11) hat er zudem eine kreisrunde Ausfräsung bzw. Bohrung 22, in die der Mitnehmerbolzen 21 demontierbar und mithin lose anzuordnen ist.

Wie näher aus den Fig. 6 und 7 hervorgeht, ist die Klemmfeder 9 hinten doppellagig abgekröpft ausgebildet und hat an ihrem allgemein mit 9.2 bezifferten Klemmfingerteil zwei Klemmfinger 9.2.1 und 9.2.2, die, wie aus Fig. 6 näher hervorgeht, gegenläufig bzw. gegensinnig zueinander im montierten Zustand quer zur Gehäuselängsachse spreizbar sind. An den Enden haben die Klemmfinger 9.2.1 sowie 9.2.2 gegensinnig ausgerichtete Hakenenden 9.3 und 9.4. Auch die Klemmfeder 9 hat eine kurvenbahnförmige Mitnehmerkulisse 9.5 sowie einen Mitnehmerbolzen 9.6, der im montierten Zustand in die kurvenbahnförmige Mitnehmerkulisse 20 des Mitnehmers 7 eingreift. Der in der Ausfräsung anzuordnende Mitnehmerbolzen 21 ist hingegen anderenends in der bahnförmigen Mitnehmerkulisse 9.5 der Klemmfeder 9 anzuordnen. In einem Zentralmittelbereich des Gehäuses ist zudem ein stiftförmiges Widerlager 23 angeordnet und in entsprechende Öffnungen 14.1 und 15.1 an den Gehäuseseitenwänden 14 und 15 anzuordnen (Fig. 1 und 2). Die Klemmfingerteile 9.2.1 und 9.2.2 mit ihren hakenförmigen Enden 9.3 und 9.4 umgrenzen scherenartig dieses stiftförmige Widerlager 23.

Wird der Mitnehmer 7, z. B. nach Einsetzen eines Imbußschraubers verdreht, wird über die beiden Mitnehmerbolzen, die in den beiden Mitnehmerkulissen entlanggleiten können, die Drehbewegung des Mitnehmers 7 in eine translatorische Bewegung der Klemmfeder aus der Spannausgangsstellung (Fig. 10) in die in Fig. 11 ersichtliche rückversetzte Spannendstellung übertragen. Dabei wird über das stiftförmige Widerlager 23 die Klemmfeder mit den Klemmfingern 9.2.1 und 9.2.2 quer zur Gehäuselängsachse nach außen gespreizt, wonach sie sich hinter den Klemmrandansätzen des Stützprofils verspannen. Dies ist mit relativ geringem Kraftaufwand zu vollziehen, wobei eine außerordentlich belastbare und sichere Verspannung mit dem Spannschloß vorliegt.

## Patentansprüche

1. Spannschloß (1) zum Verbinden eines mit einer Rastausnehmung (6) versehenen Hohlprofils (2) mit einem einen Klemmrandansatz (5) aufweisenden Trägerelement (3), insbesondere zum Verbinden von Hohlprofilstangen mit mit hinterschnittenen Nuten (4) als Klemmrandansätze versehenen Vertikalstützen von auf- und abbaubaren Gestellen, mit einem in das Hohlprofil (2) einführbaren und über einen Mitnehmer (7) in der Rastausnehmung (6) des Hohlprofils (3) arretierbaren Gehäuse (10,17) und mit einer durch eine Drehbewegung des Mitnehmers (7) aus einer Spannausgangslage in eine Spannendstellung überführbaren Klemmfeder (9) mit einem in der Spannendstellung den Klemmrandansatz (5) hintergreifenden Klemmfingerteil (9.2), wobei die Klemmfeder (9) und der Mitnehmer (7) in dem Gehäuse (10,17) beweglich angeordnet sind und das Klemmfingerteil (9.2) im Verlaufe der Spannbewegung der Klemmfeder (9) über ein im Gehäuse (10,17) festlegbares Widerlager (23) in eine quer zur Gehäuselängsachse gerichtete Spannspreizstellung bewegbar ist, **dadurch gekennzeichnet**, daß sowohl die Klemmfeder (9) als auch der Mitnehmer (7) eine kurvenbahnförmige Mitnehmerkulisse (9.5, 20) und einen in die betreffende Gegenkulisse eingreifenden, sowie die Klemmfeder (9) und den Mitnehmer (7) miteinander koppelnden Mitnehmerbolzen (9.6, 21) haben.

2. Spannschloß nach Anspruch 1, **dadurch gekennzeichnet**, daß die Mitnehmerbolzen (9.6, 21) in einer Lochausnehmung (22) der Klemmfeder (9) bzw. des Mitnehmers (7) demontierbar angeordnet sind.

3. Spannschloß nach Anspruch 1 oder 2, **dadurch gekennzeichnet**, daß die Mitnehmerbolzen (9.6, 21) an der Klemmfeder (9) bzw. dem Mitnehmer (7) angeformt sind.

4. Spannschloß nach einem der Ansprüche 1 bis 3, **dadurch gekennzeichnet,** daß die Mitnehmerkulissen (9.5, 20) durch eine Ausfräsung oder Ausstanzung gebildet sind.

5. Spannschloß nach einem der Ansprüche 1 bis 4, **dadurch gekennzeichnet,** daß der Mitnehmer (7) eine zu seiner Vertikallängsmittelebene symmetrische Gestalt hat.

6. Spannschloß nach einem der Ansprüche 1 bis 5, **dadurch gekennzeichnet,** daß das Klemmfingerteil (9.2) der Klemmfeder (9) zwei gegenläufig quer zur Gehäuselängsachse bewegbare Klemmfinger (9.2.1, 9.2.2) hat.

7. Spannschloß nach Anspruch 6, **dadurch gekennzeichnet**, daß die Klemmfinger (9.2.1, 9.2.2) gegensinnig abgewinkelte Klemmhakenenden (9.3, 9.4) haben.

8. Spannschloß nach Anspruch 6 oder 7, **dadurch gekennzeichnet**, daß das Widerlager (23) zylinderstiftförmig ausgebildet in der Längsmittelebene des Gehäuses (10, 17) angeordnet ist.

9. Spannschloß nach Anspruch 8, **dadurch gekennzeichnet**, daß die Klemmfinger (9.2.1, 9.2.2) scherenartig das zylinderstiftförmige Widerlager (23) umgrenzen.

## Claims

1. A tension lock (1) for connecting a hollow profile (2) in which there is a catch recess (6) to a carrier element (3) comprising on its edge a clamping projection (5), and in particular for connecting hollow profile rods to vertical supports of frameworks which can be assembled and dismantled and which are provided with undercut grooves (4) which serve as clamping edge projections, with a housing (10, 17) which by a drive means (7) can be locked in the catch recess (6) in the hollow profile (3) and with a clamping spring (9) which can be moved by a rotary movement of the drive means (7) out of a starting position into a final clamping position with a clamping finger part (9. 2) which in the final clamping position engages behind the clamping edge projection (5), the clamping spring (9) and the drive means (7) being disposed for movement in the housing (10, 17), the clamping finger part (9.2), during the course of the locking movement of the clamping spring (9), being adapted for movement via an abutment (23) which can be fixed in the housing (10, 17) into a clamp opening-out position which is directed crosswise to the longitudinal axis of the housing, characterised in that both the clamping spring (9) and also the drive means (7) have, engaging the respective mating sliding block, a drive pin (9.6, 21) which couples the clamping spring (9) together with the drive means (7).

2. A tension lock according to claim 1, characterised in that the drive pins (9.6, 21) are disposed in dismantleable manner in a recess (22) in the clamping spring (9), or drive means (7).

3. A tension lock according to claim 1 or 2, characterised in that the drive pins (9.6, 21) are integrally formed on the clamping spring (9) or drive means (7).

4. A tension lock according to one of claims 1 to 3, characterised in that the drive sliding blocks (9.5, 20) are formed by a milling or stamping process.

5. A tension lock according to one of claims 1 to 4, characterised in that the drive means (7) is symmetrical with its vertical longitudinal central plane.

6. A tension lock according to one of claims 1 to 5, characterised in that the clamping finger part (9.2) of the clamping spring (9) has two clamping fingers (9.2.1, 9.2.2) adapted for movement in opposite directions and crosswise to the longitudinal axis through the housing.

7. A tension lock according to claim 6, characterised in that the clamping fingers (9.2.1, 9.2.2) have clamping hook ends (9.3, 9.4) which are angled over in opposite directions.

8. A tension lock according to claim 6 or 7, characterised in that the abutment (23) is of cylindrical rod shape and is disposed in the longitudinal central plane of the housing (10, 17).

9. A tension lock according to claim 8, characterised in that the clamping fingers (9.2.1, 9.2.2) define the cylindrical pin-like abutment (23) in scissors fashion.

## Revendications

1. Dispositif de serrage (1) pour relier un profilé creux (2) pourvu d'un évidement d'arrêt (6) à un élément de support (3) présentant un rebord de serrage (5), et, plus particulièrement, pour relier des barres profilées creuses à des montants verticaux de structures montables et démontables pourvus de rainures (4) avec affouillements servant de rebords de serrage, comprenant un boîtier (10, 17) pouvant être introduit dans le profilé creux (2) et pouvant être arrêté par l'intermédiaire d'un entraîneur (7) dans l'évidement d'arrêt (6) du profilé creux (3) et un ressort de serrage (9) pouvant être amené, par un mouvement de rotation de l'entraîneur (7), d'une position initiale de serrage à une position finale de serrage et comprenant une partie formant doigts de serrage (9.2) venant en prise avec l'arrière du rebord de serrage (5) dans la position finale de serrage, le ressort de serrage (9) et l'entraîneur (7) étant montés mobiles dans le boîtier (10, 17) et la partie formant doigts de serrage (9.2) pouvant être déplacée, par l'intermédiaire d'une butée (23) pouvant être fixée dans le boîtier (10, 17), dans une position d'expansion de serrage transversale à l'axe longitudinal du boîtier, caractérisé en ce que aussi bien le ressort de serrage (9) que l'entraîneur (7) ont une coulisse d'entraînement (9.5, 20) en forme de chemin incurvé ainsi qu'un ergot d'entraînement (9.6, 21) en prise avec la contre-coulisse correspondante et accouplant l'un à l'autre le ressort de serrage (9) et l'entraîneur (7).

2. Dispositif de serrage suivant la revendication 1, caractérisé en ce que les ergots d'entraînement (9.6, 21) sont montés de manière démontable dans une ouverture (22) du ressort de serrage (9) ou de l'entraîneur (7).

3. Dispositif de serrage suivant la revendication 1 ou 2, caractérisé en ce que les ergots d'entraînement (9.6, 21) sont formés sur le ressort de serrage (9) ou sur l'entraîneur (7).

4. Dispositif de serrage suivant l'une quelconque des revendications 1 à 3, caractérisé en ce que les coulisses d'entraînement (9.5, 20) sont formées par un fraisage ou estampage.

5. Dispositif de serrage suivant l'une quelconque des revendications 1 à 4, caractérisé en ce que l'entraîneur (7) a une forme symétrique par rapport à son plan médian longitudinal vertical.

6. Dispositif de serrage suivant l'une quelconque des revendications 1 à 5, caractérisé en ce que la partie formant doigts de serrage (9.2) du ressort de serrage (9) comporte deux doigts de serrage (9.2.1, 9.2.2) pouvant être déplacés en sens opposés transversalement à l'axe longitudinal du boîtier.

7. Ressort de serrage suivant la revendication 6, caractérisé en ce que les doigts de serrage (9.2.1, 9.2.2) ont des extrémités de serrage crochues (9.3, 9.4) coudées en sens opposés.

8. Dispositif de serrage suivant la revendication 6 ou 7, caractérisé en ce que la butée (23) qui a la forme d'une tige cylindrique est disposée dans le plan médian longitudinal du boîtier (10, 17).

9. Dispositif de serrage suivant la revendication 8, caractérisé en ce que les doigts de serrage (9.2.1, 9.2.2) enserrent, en ciseaux la butée (23) en forme de tige cylindrique.
